# EUROPEAN PATENT APPLICATION

(11) **EP 3 809 282 A1**
(43) Date of publication of application: **21.04.2021**
(21) Application number: 19819728.7
(22) Date of filing: 11.06.2019
(51) Int. Cl.: G06F 16/438, G06F 16/432, G06F 16/532, G06F 16/632

(54) **INFORMATION PROCESSING DEVICE AND INFORMATION PROCESSING METHOD**

(30) Priority: 13.06.2018 JP 2018112899
(71) Applicant: Sony Corporation, 108-0075 Tokyo (JP)
(72) Inventor: SHIBUYA, Takashi, Tokyo 108-0075 (JP); ASANO, Yasuharu, Tokyo 108-0075 (JP)
(74) Representative: 2SPL Patentanwälte PartG mbB
(86) International application number: PCT/JP2019/023169
(87) International publication number: WO 2019/240144

(57) **Abstract**

A selection decision made by a user at a time of searching is facilitated.

An optimum output mode for each word is determined from an input sentence including a plurality of words, and data of the determined output mode corresponding to each word is output. For example, a suitable word for presentation by an image is extracted from an input sentence including a plurality of words, and an image corresponding to the suitable word is output. For example, the image corresponding to the suitable word is output by being included in a search result corresponding to other search conditions of the input sentence. In this case, it becomes possible to present the user with the image corresponding to the word that is included in the input sentence and is suitable for presentation by an image.

## Description

### TECHNICAL FIELD

The present technology relates to an information processing apparatus and a method for processing information, and more particularly, to an information processing apparatus and a method for processing information suitable for being applied to an information providing service based on a user's input sentence.

### BACKGROUND ART

There has been known a restaurant search service that enables a restaurant search on the Web. In the restaurant search service, only predetermined text information and image information are displayed as a search result regardless of search conditions. For example, Patent Document 1 discloses presenting an image related to a searched restaurant.

At a time of making a selection decision regarding a restaurant to visit from a plurality of candidates of a search result, a user needs to go back and forth through a web page to see detailed information. Furthermore, when the user actually go to the selected and decided restaurant after making the selection decision as described above, the user may make a mistake such as the atmosphere or served food being different from the expected one.

In addition to the restaurant search service, there have been similar problems in a search service for real estate such as rental apartments, a search service for hotels at travel destinations, and a person-to-person matching service.

### CITATION LIST

### PATENT DOCUMENT

Patent Document 1: Japanese Patent Application Laid-Open No. 2017-091071

### SUMMARY OF THE INVENTION

### PROBLEMS TO BE SOLVED BY THE INVENTION

An object of the present technology is to facilitate a user's selection decision at a time of searching.

### SOLUTIONS TO PROBLEMS

The present technology has a concept directed to:
an information processing apparatus including:
a data output unit that determines, from an input sentence including a plurality of words, an optimum output mode for each of the words and outputs data of the determined output mode corresponding to each of the words.

According to the present technology, the data output unit determines the optimum output mode for each word from the input sentence including a plurality of words. For example, although the input sentence may be directly input as text, it may be obtained from voice signals on the basis of voice recognition. Furthermore, for example, the output mode may include at least one of a visual sense, an auditory sense, a tactile sense, or an olfactory sense. Then, the data output unit outputs data of the determined output mode corresponding to each word.

As described above, according to the present technology, the optimum output mode for each word is determined from an input sentence including a plurality of words, and data of the determined output mode corresponding to each word is output. Therefore, it becomes possible to present information corresponding to the plurality of words included in the input sentence in an appropriate form, whereby a user's selection decision at a time of searching can be facilitated.

Furthermore, the present technology has another concept directed to:
an information processing apparatus including:
a word extraction unit that extracts, from an input sentence including a plurality of words, a suitable word for presentation by an image; and
an output unit that outputs an image corresponding to the suitable word.

According to the present technology, the word extraction unit extracts a suitable word for presentation by an image from an input sentence including a plurality of words. For example, although the input sentence may be directly input as text, it may be obtained from voice signals on the basis of voice recognition. Then, the output unit outputs an image corresponding to the suitable word.

As described above, according to the present technology, a suitable word for presentation by an image is extracted from an input sentence including a plurality of words, and an image corresponding to the extracted suitable word is output. Therefore, it becomes possible to present the user with the image corresponding to the word included in the input sentence and suitable for presentation by an image, whereby a user's selection decision at a time of searching can be facilitated.

Note that, in the present technology, the output unit may be configured to output the image corresponding to the suitable word in a state of being included in a search result corresponding to other search conditions of the input sentence, for example. With this arrangement, it becomes possible to present the user with the image corresponding to the suitable word together with search results corresponding to the other search conditions of the input sentence.

### EFFECTS OF THE INVENTION

According to the present technology, it becomes possible to facilitate a user's selection decision at a time of searching. Note that the effects described herein are not necessarily limited, and may be any of the effects described in the present disclosure.

### BRIEF DESCRIPTION OF DRAWINGS

Fig. 1 is a block diagram illustrating an exemplary configuration of an information processing apparatus as an embodiment.
Fig. 2 is a diagram illustrating an exemplary process of extracting search words for a database search and image selection performed by a search condition analysis unit.
Fig. 3 is a diagram illustrating an exemplary display screen of a search result in a conventional search service.
Fig. 4 is a diagram illustrating an exemplary display screen of a search result according to the embodiment.
Fig. 5 is a diagram illustrating another exemplary display screen of a search result according to the embodiment.
Fig. 6 is a diagram illustrating an exemplary display screen of a search result in a case where a user has selected a display format of "photograph comparison".
Fig. 7 is a flowchart illustrating an exemplary search processing procedure in a cloud server.

### MODE FOR CARRYING OUT THE INVENTION

Hereinafter, an embodiment for carrying out the present invention (hereinafter referred to as an embodiment) will be described. Note that descriptions will be given in the following order.
1. Embodiment
2. Variations

### <1. Embodiment>

### [Information Processing Apparatus]

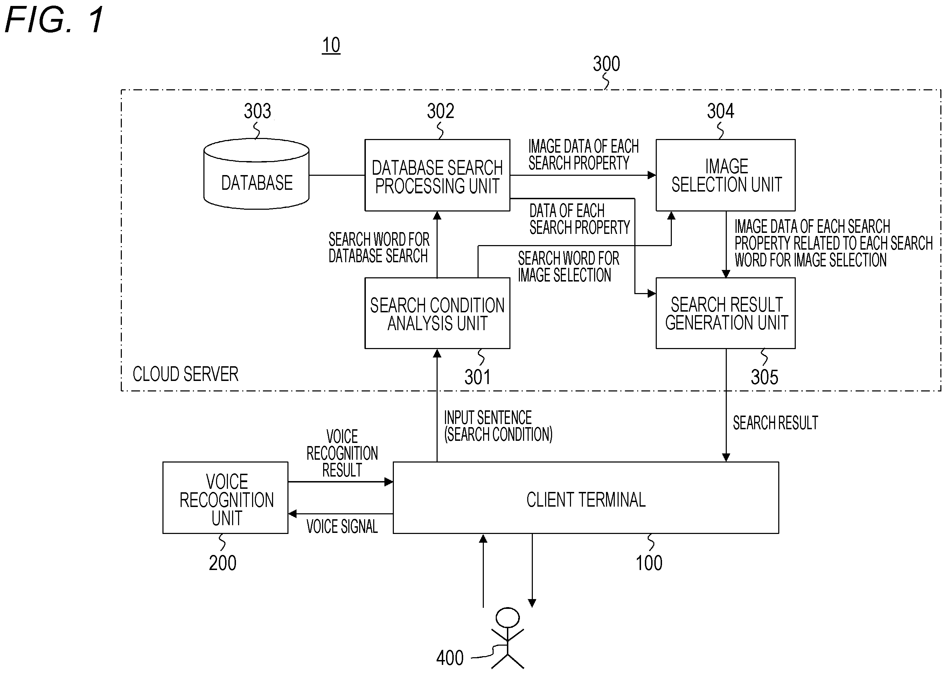

Fig. 1 illustrates an exemplary configuration of an information processing apparatus 100 as an embodiment. The information processing apparatus 10 includes a client terminal 100, a voice recognition unit 200, and a cloud server 300 that provides a search service, which is a restaurant search service in the present embodiment.

The client terminal 100 is a smartphone, a tablet, a personal computer, an artificial intelligence (AI) speaker, or the like, which is an electronic device that allows a user 400 to input search conditions and is capable of presenting the search result to the user on a screen display. The user 400 can input, using the client terminal 100, an input sentence including a plurality of words as a search condition by, for example, text input or voice input.

In a case where an input sentence is input to the client terminal 100 by voice, the voice recognition unit 200 imports voice signals corresponding to the input sentence from the client terminal 100, performs voice recognition processing on the voice signals to convert them into text data, and returns the text data to the client terminal 100 as a voice recognition result. Note that the voice recognition unit 200 may be included in the client terminal 100.

The cloud server 300 is a server for a search service to which the client terminal 100 can connect via the Internet (not illustrated). The cloud server 300 receives, from the client terminal 100, an input sentence as a search condition by text data, performs a search process corresponding to the input sentence, and returns a search result including image information to the client terminal 100.

Note that a configuration in which the cloud server 300 includes the voice recognition unit 200 described above is also conceivable. In that case, when the input sentence as a search condition is input by voice, the client terminal 100 transmits voice signals corresponding to the input sentence to the client server 300, and the cloud server 300 converts the voice signals into text data to use them.

The cloud server 300 includes a search condition analysis unit 301, a database search processing unit 302, a database 303, an image selection unit 304, and a search result generation unit 305. Note that, although an exemplary case where the cloud server 300 includes the database 303 is illustrated in the example illustrated in the drawing, the database 303 may exist outside the cloud server 300, and may be managed by a service provider different from the service provider of the cloud server 300.

The search condition analysis unit 301 analyzes the input sentence as a search condition and extracts a search word. In this case, the search condition analysis unit 301 has a first function of extracting a search word for a database search from the input sentence, and a second function of extracting a search word for image selection from the input sentence.

The first function is a function of converting an input sentence into information to be passed to the database search processing unit 302. Depending on the input specification of the database search processing unit 302, for example, in a case where the input sentence is natural language "Italian restaurant with a beautiful night view in Shinjuku", the search condition analysis unit 301 functions to divide the input sentence into words "Shinjuku, night view, and Italian restaurant". Alternatively, in a case where the database search processing unit 302 is designed to accept search conditions for each attribute such as location and genre, it functions to make a conversion into a format of "attribute and its value" such as "location: Shinjuku, genre: Italian restaurant".

The second function is a function of converting the input sentence into attribute information to be passed to the image selection unit 304, which is preferably presented in an image. For example, in a case where the input sentence is natural language "Italian restaurant with a beautiful night view in Shinjuku", it is converted into the format of "attribute and its value", which is "view: night view, view characteristics: beautiful".

Note that the search condition analysis unit 301 also has a function of extracting a search word while considering both past input and current input in a case where a search condition (input sentence) is added. For example, in a case where the user indicates an additional condition "place for delicious pizza" while a search result is displayed under the condition "Italian restaurant with beautiful night view in Shinjuku", search words "Shinjuku, night view, Italian restaurant, pizza" are extracted according to the first function, and are converted into information "view: night view, view characteristics: beautiful, food: pizza, food characteristics: delicious" according to the second function.

Furthermore, as described above, it is also conceivable to employ a method of extracting, regardless of the attribute, a phrase suitable for presentation by visual information from any input search condition, in addition to the method of preliminarily defining the attribute and extracting a suitable word for the attribute. In that case, for example, two sets of phrases "night view: beautiful" and "pizza: delicious" are extracted from the expression "Italian restaurant with beautiful night view in Shinjuku, place for delicious pizza", and are passed to the image selection unit 304.

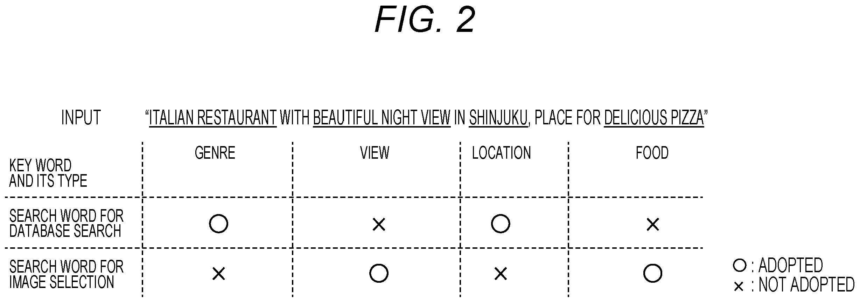

Fig. 2 illustrates an exemplary process of extracting search words for a database search and image selection performed by the search condition analysis unit 301. This example illustrates a case where the input sentence as a search condition is "Italian restaurant with beautiful night view in Shinjuku, place for delicious pizza". In this case, keywords "Shinjuku, beautiful night view, Italian restaurant, pizza" are extracted by analysis, and types of the respective words are specified as "location, view, genre, food". Then, "Shinjuku, Italian restaurant" are determined not to be required to present images from their type, and are adopted as search words for a database search, whereas "beautiful night view, pizza" are determined to be required to present images from their type, and are adopted as search words for image selection.

The search word for a database search extracted by the search condition analysis unit 301 is supplied to the database search processing unit 302. The database search processing unit 302 is what is called a search engine. The database search processing unit 302 searches the database 303 for a property (restaurant) suitable for the search word for a database search, and outputs data of a predetermined number of properties arranged in the order of matching the search word. Hereinafter, the property searched in this manner will be referred to as a "search property".

The search word for image selection extracted by the search condition analysis unit 301 is supplied to the image selection unit 304. Furthermore, image data of the data of each search property output from the database search processing unit 302 is supplied to the image selection unit 304. The image selection unit 304 has a function of selecting, for each search property, image data of an image most suitable for a search word for image selection from image data of each search property. Here, in a case where there is a plurality of search words for image selection, the image data of the most suitable image is selected for each search word.

Examples of a method of selection include a method using captions and explanatory notes for image data registered in the database 303, a method based on technology for analyzing image contents called "image annotation technology", and a method using a mechanism of calculating similarity between a search word and an image using word vector conversion technology (word embedding technology).

Note that the image selection unit 304 also has a function of determining that there is no image data of an image suitable for the search word. Furthermore, the image data to be selected by the image selection unit 304 is not limited to the image data registered in the database 303, and may be obtained from an external photograph sharing service and the like on the basis of a search property name (restaurant name) and a search word for image selection.

The image data of the image most suitable for each search word, which is selected by the image selection unit 304 for each search property, is supplied to the search result generation unit 305. Furthermore, the data of each search property output from the database search processing unit 302 is supplied to the search result generation unit 305. The search result generation unit 305 adds the image data of the image most suitable for each search word selected by the image selection unit 304 to the search property data output from the database search processing unit 302 for each search property, thereby generating a search result. Note that the image data may be replaced instead of adding the image data.

The search result generation unit 305 transmits the generated search result to the client terminal 100. The client terminal 100 performs rendering on the basis of the search result transmitted from the cloud server 300, generates an inspection result display screen, and presents it to the user 400. Note that the rendering process of generating the inspection result display screen may be performed by the cloud server 300 instead of the client terminal 100.

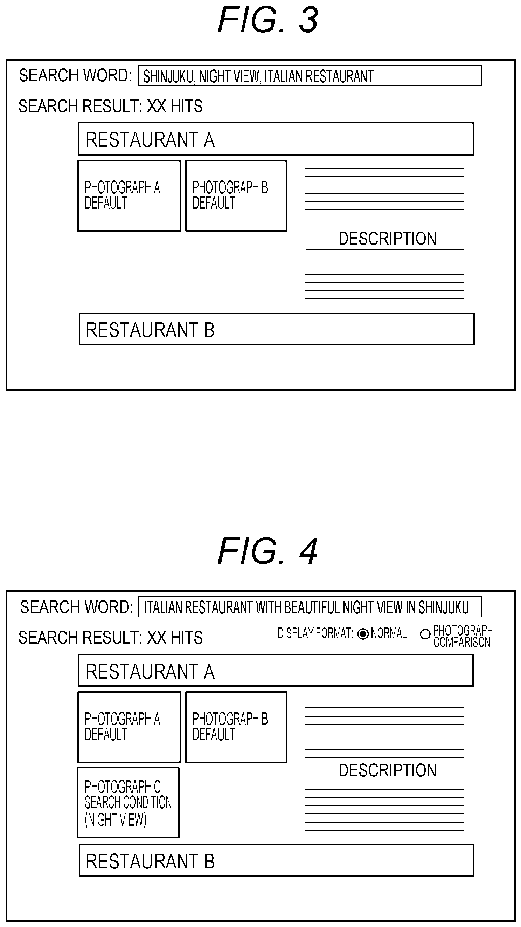

Fig. 3 illustrates an exemplary display screen of a search result in a conventional search service. The illustrated example presents a case where the user inputs search words "Shinjuku, night view, Italian restaurant" to search a restaurant. In this case, a restaurant name, a default image (photograph), description, and the like are displayed for each search property. The default image displayed here is determined in advance by a service side or a store side, and an image of "night view" is not necessarily displayed.

Fig. 4 illustrates an exemplary display screen of a search result according to the present embodiment. The illustrated example presents a case where the user inputs, as a search condition, an input sentence "Italian restaurant with beautiful night view in Shinjuku" to search a restaurant, which is an exemplary case where "beautiful night view" is extracted as a search word for image selection. In this case, in addition to a restaurant name, a default image (photograph), description, and the like being displayed for each search property, a night view image most suitable for the search word for image selection is also displayed.

Note that the illustrated example presents a case where the user has selected a display format of "normal". Although illustration is omitted, in a case where the user has selected a display format of "photograph comparison", a restaurant name and images (default image (photograph) and search word image (photograph)) are displayed for each search property while display of other items such as description is omitted.

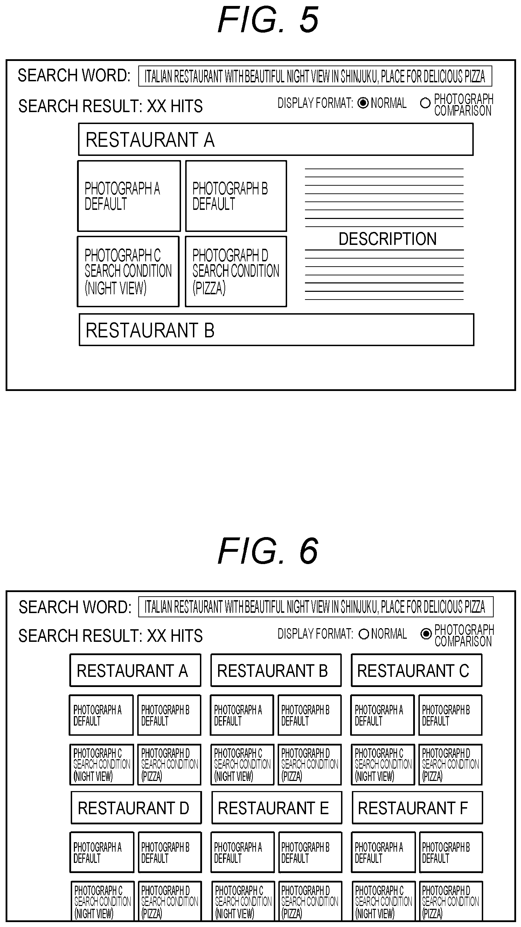

Fig. 5 illustrates another exemplary display screen of a search result according to the present embodiment. The illustrated example presents a case where the user inputs, as a search condition, an input sentence "Italian restaurant with beautiful night view in Shinjuku, place for delicious pizza" to search a restaurant, which is an exemplary case where "beautiful night view" and "place for delicious pizza" are extracted as search words for image selection. In this case, a case where the user inputs the input sentence "Italian restaurant with beautiful night view in Shinjuku" as a search condition and adds the input sentence "place for delicious pizza" as a search condition is treated in a similar manner.

In this case, in addition to the restaurant name, default image (photograph), description, and the like being displayed for each search property, an image of a night view most suitable for the search word "beautiful night view" for image selection and an image of a pizza most suitable for the search word "delicious pizza" for image selection are also displayed. Note that the illustrated example presents a case where the user has selected a display format of "normal".

Fig. 6 illustrates a case where the user has selected a display format of "photograph comparison". A restaurant name and images (default image (photograph) and a search word image (photograph)) are displayed for each search property, and display of other items such as description is omitted. According to the display format of "photograph comparison", it becomes possible to easily compare search properties by images.

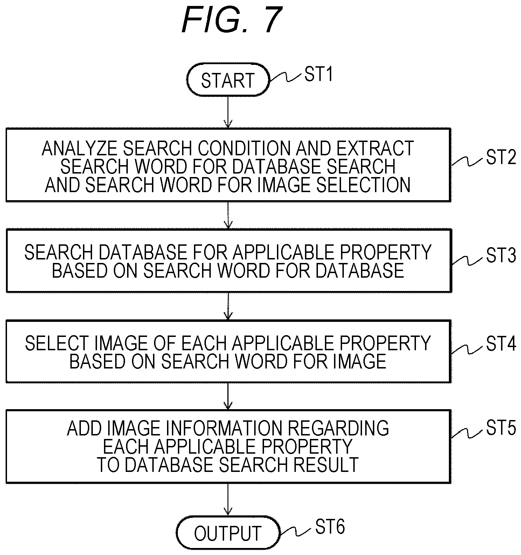

The flowchart of Fig. 7 illustrates an exemplary search processing procedure in the cloud server 300. The cloud server 300 starts a search process in step ST1. Next, in step ST2, the cloud server 300 causes the search condition analysis unit 301 to analyze the input sentence as a search condition to extract a search word for a database search and a search word for image selection.

Next, in step ST3, the cloud server 300 causes the database search processing unit 302 to search the database 303 for an applicable property, that is, a property (restaurant) suitable for the search word, on the basis of the search word for a database search. Next, in step ST4, the cloud server 300 causes the image selection unit 304 to select an image of each applicable property on the basis of the search word for image selection.

Next, in step ST5, the cloud server 300 causes the search result generation unit 305 to add image information associated with each applicable property to the database search result, thereby generating a final search result. Thereafter, the cloud server 300 ends the process in step ST6.

As described above, in the information processing apparatus 100 illustrated in Fig. 1, a word (search word for image selection) for which presentation by an image is suitable is extracted from an input sentence including a plurality of words, and image data of an image corresponding to the word is included in data of a search property to form a search result. Therefore, it becomes possible to present the user with the image corresponding to the word included in the input sentence and suitable for presentation by an image, whereby a user's selection decision at a time of searching can be facilitated.

In this case, when the user narrows down the candidates from the search result properties, relevant information associated with each property can be listed, which saves the user from having to go back and forth through a web page to see every detail. Furthermore, in this case, it is easy to visually check relevant information associated with search conditions, whereby a case of making a mistake such as "the actual one is different from the expected one and disappointing while being chosen from the search results" can be reduced.

### <2. Variations>

Note that, in the embodiment described above, an exemplary case where the present technology is applied to a restaurant search service has been described. The scope of application of the present technology is not limited to the restaurant search service, and it can be applied to other search services in a similar manner.

For example, the present technology can be applied to a hotel search service for travel. For example, in a case where an input sentence as a search condition is "hotel with a sea view and private bath", search words for image selection would be as follows.
facility: private bath
view: sea

Furthermore, the present technology can be applied to a matching service. For example, in a case where an input sentence as a search condition is "man with short hair and a neat mustache", search words for image selection would be as follows.
hairstyle: short hair
facial characteristics: mustache

Furthermore, in the embodiment described above, an exemplary case where an output mode is a visual sense has been described. The present technology can be applied to other output modes such as an auditory sense, tactile sense, and olfactory sense. For example, in a case where an input sentence as a search condition is "quiet room with plenty of storage space" in a search service for real estate rental apartments, it can be analyzed as follows.
facility: plenty of storage space
noise environment: quiet

At this time, the noise environment itself is information appropriate to appeal to the auditory sense rather than the visual sense. In response to the search condition, it is possible for a search service provider to measure a noise level (in decibels) of each property in advance and make a sample audio source corresponding to the noise level sound on a search result screen. In this case, the noise level of each property may sound together with the noise level of the place where the user currently lives. In this case, for example, in the information processing apparatus 10 illustrated in Fig. 1, a sample audio source corresponding to the noise level is created at the image selection unit 304, and the sample audio source is added to each search property data at the search result generation unit 305 to form a search result to be transmitted to the client terminal 100. Note that it is conceivable to use, for example, actually recorded environmental sounds in the morning, in the daytime, and at night instead of the sample audio source corresponding to the noise level.

Furthermore, in a case where an input sentence as a search condition is "red fluffy heart-shaped cushion" in a search service for home furnishings, for example, it can be analyzed as follows.
color: red
shape: heart-shaped
texture: fluffy

At this time, while it is preferable to present the color and shape as visual information, a sense such as a texture and feel can be presented by a tactile presentation device or a tactile display.

Furthermore, although the preferred embodiment of the present disclosure has been described in detail with reference to the accompanying drawings, the technical scope of the present disclosure is not limited to such an example. It is obvious that those skilled in the art in the technical field of the present disclosure may find various alterations and modifications within the technical ideas of the appended claims, and it should be understood that such alterations and modifications are also naturally within the technical scope of the present disclosure.

Furthermore, the present technology can also take the following configurations.
(1) An information processing apparatus including:
   a data output unit that determines, from an input sentence including a plurality of words, an optimum output mode for each of the words and outputs data of the determined output mode corresponding to each of the words.
(2) The information processing apparatus according to (1) described above, in which
   the input sentence is obtained from a voice signal on the basis of voice recognition.
(3) The information processing apparatus according to (1) or (2) described above, in which
   the output mode includes at least one of a visual sense, an auditory sense, a tactile sense, or an olfactory sense.
(4) A method for processing information including:
   determining, from an input sentence including a plurality of words, an optimum output mode for each of the words and outputting data of the determined output mode corresponding to each of the words.
(5) An information processing apparatus including:
   a word extraction unit that extracts, from an input sentence including a plurality of words, a suitable word for presentation by an image; and
   an output unit that outputs an image corresponding to the extracted suitable word.
(6) The information processing apparatus according to (5) described above, in which
   the input sentence is obtained from a voice signal on the basis of voice recognition.
(7) The information processing apparatus according to (5) or (6) described above, in which
   the output unit outputs the image corresponding to the suitable word in a state of being included in a search result corresponding to another search condition of the input sentence.
(8) A method for processing information including:
   extracting, from an input sentence including a plurality of words, a suitable word for presentation by an image; and
   outputting an image corresponding to the extracted suitable word.

### REFERENCE SIGNS LIST

- 10: Information processing apparatus
- 100: Client terminal
- 200: Voice recognition unit
- 300: Cloud server
- 301: Search condition analysis unit
- 302: Database search processing unit
- 303: Database
- 304: Image selection unit
- 305: Search result generation unit

## Claims

1. An information processing apparatus comprising:
a data output unit that determines, from an input sentence including a plurality of words, an optimum output mode for each of the words and outputs data of the determined output mode corresponding to each of the words.

2. The information processing apparatus according to claim 1, wherein
the input sentence is obtained from a voice signal on a basis of voice recognition.

3. The information processing apparatus according to claim 1, wherein
the output mode includes at least one of a visual sense, an auditory sense, a tactile sense, or an olfactory sense.

4. A method for processing information comprising:
determining, from an input sentence including a plurality of words, an optimum output mode for each of the words and outputting data of the determined output mode corresponding to each of the words.

5. An information processing apparatus comprising:
a word extraction unit that extracts, from an input sentence including a plurality of words, a suitable word for presentation by an image; and
an output unit that outputs an image corresponding to the extracted suitable word.

6. The information processing apparatus according to claim 5, wherein
the input sentence is obtained from a voice signal on a basis of voice recognition.

7. The information processing apparatus according to claim 5, wherein
the output unit outputs the image corresponding to the suitable word in a state of being included in a search result corresponding to another search condition of the input sentence.

8. A method for processing information comprising:
extracting, from an input sentence including a plurality of words, a suitable word for presentation by an image; and
outputting an image corresponding to the extracted suitable word.
